(19) Europäisches Patentamt
European Patent Office
Office européen des brevets

(11) **EP 3 447 444 A1**

(12) **EUROPEAN PATENT APPLICATION**
published in accordance with Art. 153(4) EPC

(43) Date of publication:
**27.02.2019 Bulletin 2019/09**

(51) Int Cl.:
***G01C 15/00*** *(2006.01)*

(21) Application number: **18760540.7**

(86) International application number:
**PCT/JP2018/002173**

(22) Date of filing: **25.01.2018**

(87) International publication number:
**WO 2018/159166 (07.09.2018 Gazette 2018/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **03.03.2017 JP 2017040347**

(71) Applicant: **Neo Japan Systems.Co.,Ltd.**
**Uwajima-shi, Ehime 798-0020 (JP)**

(72) Inventor: **OKADA, Takao**
**Uwajima-shi**
**Ehime 798-0020 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **AUTOMATIC SURVEYING PROGRAM AND AUTOMATIC SURVEYING SYSTEM**

(57) An automatic surveying system includes a surveying apparatus including a distance measurement member capable of performing distance measurement in a non-prism method and a distance measurement member rotating member which rotates the distance measurement member and an information processing apparatus which controls the surveying apparatus, and performs processing which drives the distance measurement member rotating member in such a way as to cause the distance measurement member to face a first measurement position of a pile targeted for surveying and then acquires distance measurement data of the distance measurement member, processing which drives the distance measurement member rotating member in such a way as to cause the distance measurement member to face a second measurement position of the pile targeted for surveying and then acquires distance measurement data of the distance measurement member, processing which determines a normal measurement state and an abnormal measurement state based on distance measurement data, and processing which, in a case of the abnormal measurement state, drives the distance measurement member rotating member in such a way as to move a direction of the distance measurement member by a predetermined movement amount in a direction of a side which is not in the abnormal measurement state of the first measurement position or the second measurement position.

[Fig. 1]

## Description

Technical Field

This invention relates to an automatic surveying system that measures the position of a pile which moves.

Background Art

As an apparatus that measures the position of a construction object such as a pile, an apparatus including a distance measurement member and a rotation member which performs horizontal rotation and vertical rotation of the distance measurement member is used. In, for example, PTL1, a measurement method which uses a surveying apparatus called a total station and which attaches a reflecting target called a prism to an object and measures the position of such a reflecting device is described. Moreover, there is a non-prism method which directly measures the surface of an object without using the reflecting target called a prism.

Citation List

Patent Literature

PTL1: JP-A-2016-138802

Summary of Invention

Technical Problem

In a case such as the invention described in PTL1, it is required to attach a reflecting target to a measurement object. Attaching the reflecting target at a high position of a pile prior to driving the pile is troublesome work. In many cases, since a large number of piles will be driven in one round of construction, attaching reflecting targets to all of the piles and removing and collecting the reflecting targets after construction become a heavy burden. Moreover, this reflecting target is an expensive member, and, even in the case of rental, using a large number of reflecting targets causes an increase in cost accordingly.

Furthermore, to guide a pile which is moving to a scheduled piling position, it is required to continue measuring the position of the pile. In, for example, PTL1, causing a distance measurement member of the surveying apparatus to automatically follow the movement of the reflecting target is described. However, an optical element called a prism is the one recognized as a dot when viewed as a measurement object. It is difficult to automatically track the movement of this dot in a correct manner. Then, when the position of the reflecting target has become unable to be recognized, it is impossible to automatically perform searching in an effective manner.

On the other hand, if the non-prism method, which does not use a reflecting target, is employed, the work for attaching a reflecting target becomes unnecessary. However, it is impossible to perform surveying while automatically tracking an object which moves. Accordingly, during a construction period, it is necessary to allocate a worker to a measurement spot and continue manually tracking an object.

This invention has an object to provide an automatic surveying program and an automatic surveying system each of which is capable of measuring the position of a pile which moves while automatically tracking the pile in a non-prism method, which does not use a reflecting target.

Solution to Problem

To solve the above-mentioned problems, an automatic surveying program of this invention causes an information processing apparatus to repeatedly perform processing which drives a distance measurement member rotating member in such a way as to cause a distance measurement member to face a first measurement position of a pile targeted for surveying and then acquires distance measurement data of the distance measurement member, processing which drives the distance measurement member rotating member in such a way as to cause the distance measurement member to face a second measurement position of the pile targeted for surveying and then acquires distance measurement data of the distance measurement member, and processing which determines a normal measurement state and an abnormal measurement state based on distance measurement data, and causes the information processing apparatus to perform processing which, in a case of the abnormal measurement state, drives the distance measurement member rotating member in such a way as to move a direction of the distance measurement member by a predetermined movement amount in a direction of a side which is not in the abnormal measurement state of the first measurement position or the second measurement position.

An automatic surveying system of this invention includes a surveying apparatus including a distance measurement member capable of performing distance measurement in a non-prism method and a distance measurement member horizontal angle rotating member which rotates the distance measurement member around a rotation axis in vertical direction and an information processing apparatus which controls the surveying apparatus, and performs processing which drives a distance measurement member rotating member in such a way as to cause the distance measurement member to face a first measurement position of a pile targeted for surveying and then acquires distance measurement data of the distance measurement member, processing which drives the distance measurement member rotating member in such a way as to cause the distance measurement member to face a second measurement position of the pile targeted for surveying and then acquires distance measurement data of the distance measurement member, processing which determines a normal measurement state and an abnormal measurement state based on distance measurement data, and processing which, in a case of the abnormal measurement state, drives the distance measurement member rotating member in such a way as to move a direction of the distance measurement member by a predetermined movement amount in a direction of a side which is not in the abnormal measurement state of the first measurement position or the second measurement position.

In the automatic surveying program and the automatic surveying system, when the first measurement position is set to a base side height position of the pile and the second measurement position is set to an upper portion side height position of the pile, in the case of the abnormal measurement state in the upper portion side height position, a distance measurement member vertical angle rotating member can be driven in such a way as to move the direction of the distance measurement member by a predetermined movement amount in a direction of the base side height position and that position can be set to the upper portion side height position.

Alternatively, when the first measurement position is set to a right side measurement position of the pile and the second measurement position is set to a left side measurement position of the pile, in the case of the abnormal measurement state, the distance measurement member horizontal angle rotating member can be driven in such a way as to move the direction of the distance measurement member by a predetermined movement amount in a direction of a side which is not in the abnormal measurement state of the right side measurement position or the left side measurement position and a measurement reference position can be shifted by the movement amount and then set.

Advantageous Effects of Invention

In an automatic surveying program and an automatic surveying system of this invention, it is not necessary to perform attachment and detachment of a reflecting target to and from a pile targeted for surveying. Then, it is possible to cause the direction of the distance measurement member to appropriately follow the displacement of the pile, thus automatically continuing surveying.

Brief Description of Drawings

Fig. 1 is a block diagram illustrating a configuration of an automatic surveying system.
Fig. 2 is a block diagram illustrating a configuration of an information processing apparatus of the automatic surveying system.
Fig. 3 is a block diagram used for schematically explaining a configuration of an automatic surveying program.
Fig. 4 is a conceptual diagram used for schematically explaining a configuration of pile data.
Fig. 5 is a flowchart used for explaining horizontal tracking processing.
Fig. 6 is a front view of a pile illustrating a right side measurement position and a left side measurement position.
Fig. 7 is a plan view of the same pile.
Fig. 8 is a plan view used for explaining distance measurement.
Fig. 9 is an enlarged plan view of a portion of the pile.
Fig. 10 is a side view used for explaining distance measurement.
Fig. 11 is an explanatory diagram illustrating the center position of the pile.
Fig. 12 is an explanatory diagram illustrating measurement of a pile x performed at a given point in time.
Fig. 13 is a flowchart used for explaining vertical tracking processing.
Fig. 14 is a conceptual diagram illustrating measurement in vertical tracking processing.
Fig. 15 is a conceptual diagram illustrating an inclination of the pile.
Fig. 16 is a conceptual diagram schematically illustrating an operation for vertical tracking. Description of Embodiments

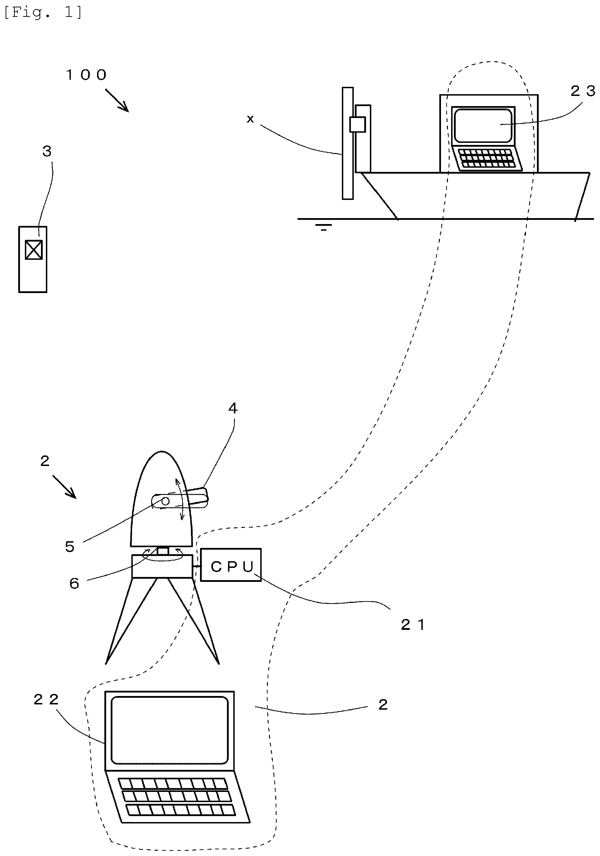

Embodiments will be explained in detail based on the drawings. Fig. 1 is a block diagram illustrating a configuration of an automatic surveying system. The automatic surveying system 100 includes a surveying apparatus 1 and an information processing apparatus 2. Moreover, a reference point reflecting member 3, which serves as a reference point for surveying, is used.

The surveying apparatus 1 includes a distance measurement member 4, which is capable of performing distance measurement in a non-prism method, a distance measurement member horizontal angle rotating member 6, which rotates the distance measurement member around a rotation axis extending in the vertical direction, and a distance measurement member vertical angle rotating member 5, which rotates the distance measurement member around a rotation axis extending in the horizontal direction. Here, the non-prism method is a method of directly performing distance measurement on the surface of a pile targeted for surveying without using a reflecting member called a prism. While, in the present example, an apparatus which is called a total station and is in widespread use is used, the surveying apparatus 1 is not limited to the total station as long as it is the one satisfying the above-mentioned requirement. A processing apparatus 21 is appended to the surveying apparatus 1 and controls the distance measurement member horizontal angle rotating member 6 and the distance measurement member vertical angle rotating member 5 to enable the surveying apparatus 1 to measure a distance to a point which the distance measurement member 4 is facing.

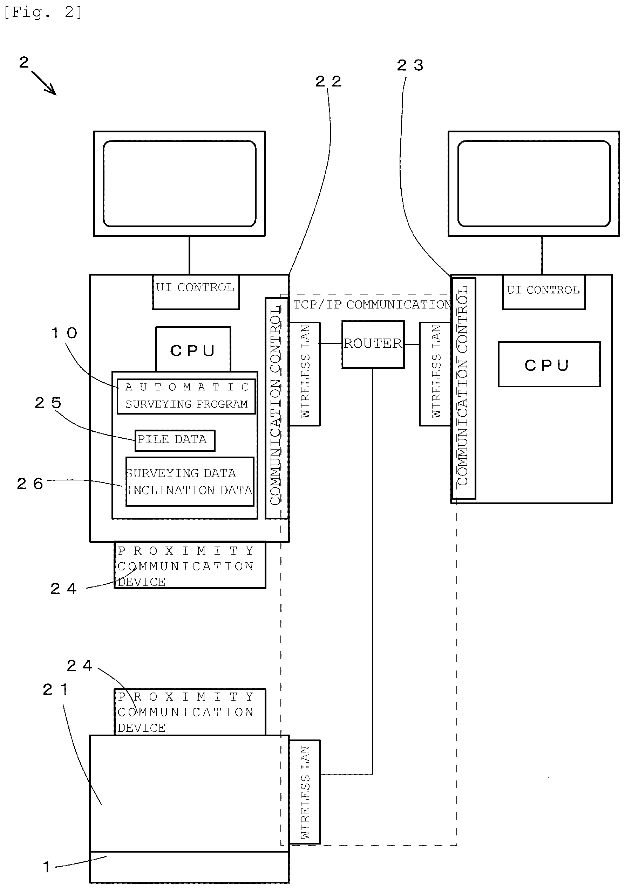

Fig. 2 is a block diagram illustrating a configuration of the information processing apparatus of the automatic surveying system. In the invention of the present application, the information processing apparatus 2 does not need to have particularly high processing capacity, and, for example, a general-purpose personal computer, a tablet terminal, or a mobile phone terminal can be selected as the information processing apparatus 2. Moreover, how many terminals are used to configure the information processing apparatus 2 is also optional. In the present example, a configuration which has high general-purpose properties and is simple to install is used for description. Since, in the present example, a total station is used as the surveying apparatus 1, a part of the functions of the processing apparatus 21 included in the total station is also used. Furthermore, a surveying site terminal 22 (a parent device), which is used near the surveying apparatus 1, and a conveyance unit terminal 23 (a child device), which is used in a conveyance member which conveys a pile x targeted for measurement, are also used.

The surveying apparatus 1 and the surveying site terminal 22 each are equipped with a near-field wireless communication device, such as Bluetooth (registered trademark), and a wireless LAN device, and are able to communicate with each other via these devices. Moreover, the conveyance unit terminal 23 is also equipped with a wireless LAN device and is able to perform communication using TCP/IP. Here, a major portion of an automatic surveying program which is used in the present invention is installed on the surveying site terminal 22.

The automatic surveying program causes an information processing apparatus to repeatedly perform:

processing which drives a distance measurement member rotating member in such a way as to cause a distance measurement member to face a first measurement position of a pile targeted for surveying and then acquires distance measurement data of the distance measurement member;
processing which drives the distance measurement member rotating member in such a way as to cause the distance measurement member to face a second measurement position of the pile targeted for surveying and then acquires distance measurement data of the distance measurement member; and
processing which determines a normal measurement state and an abnormal measurement state based on distance measurement data, and
causes the information processing apparatus to perform processing which, in the case of the abnormal measurement state, drives the distance measurement member rotating member in such a way as to move a direction of the distance measurement member by a predetermined movement amount in a direction of a side which is not in the abnormal measurement state of the first measurement position or the second measurement position. This automatic surveying program causes the direction of the distance measurement member 4 to follow movement of the pile targeted for measurement, thus automatically continuing measuring the distance to the pile.

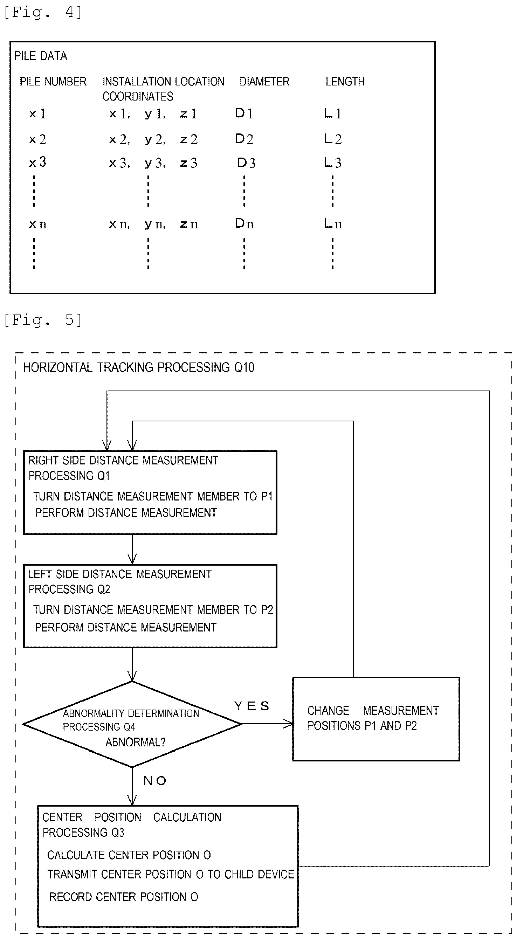

An embodiment of the present invention will be described in more detail. Pile data is previously stored in a pile data storage unit M1 of the information processing apparatus. An example of a configuration of the pile data storage unit M1 is illustrated in Fig. 4. With respect to each of piles x1, x2, ..., xn, the diameter D and installation location coordinates (x, y, z) of the pile are previously input. Moreover, the installation location of the distance measurement member 1 and the installation location of the reference point reflecting member 3 in the construction site are previously determined.

Next, the surveying apparatus 1 and the reference point reflecting member 3 are installed at the determined locations. Then, the distance measurement member 4 of the distance measurement member 1 is caused to face the reference point reflecting member 3. A common total station has the function of automatically searching for the reference point reflecting member 3, and, therefore, this can be used. When reference point detection processing in the automatic surveying program is performed, the surveying site terminal 22 instructs the distance measurement member 1 to search for the reference point reflecting member 3 and turn the distance measurement member 4 in the direction of that. Upon receiving this, the distance measurement member horizontal angle rotating member 6 and the distance measurement member vertical angle rotating member 5 of the distance measurement member 1 are driven, thus causing the distance measurement member 4 to face the reference point reflecting member 3. The direction of the distance measurement member 4 obtained at this time serves as a reference direction, and an included angle with respect to that direction will be output as a measured value of a horizontal angle obtained by the distance measurement member 1.

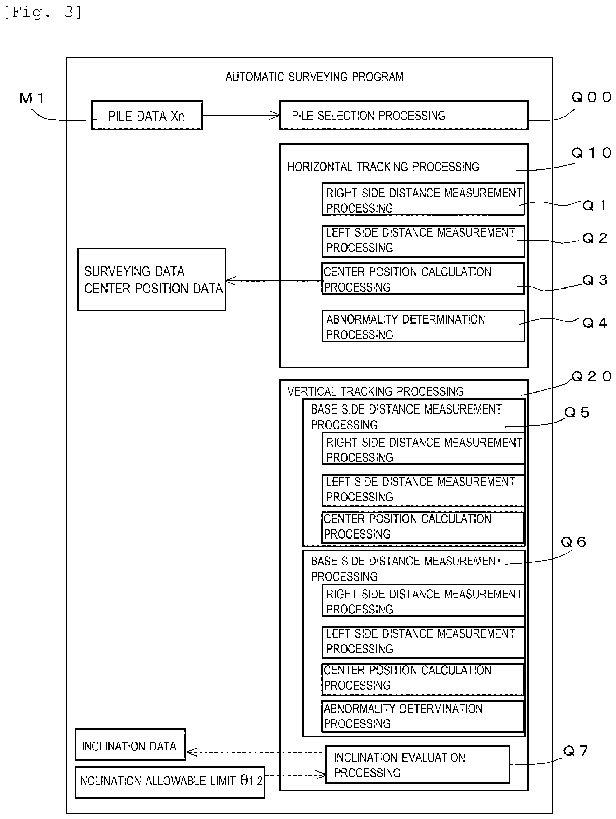

Fig. 3 is a block diagram used for schematically explaining a configuration of the automatic surveying program, and Fig. 4 is a conceptual diagram used for schematically explaining a configuration of pile data.

Suppose that the installation of the first pile is to be performed. First, pile selection processing Q00 in the automatic surveying program is performed. The worker determines a pile which is to be first installed from piles x1, x2, ..., xn, which are stored in the pile data storage unit M1, and issues an instruction for selection via an input device of the surveying site terminal 22. In response to this, the surveying site terminal 22 reads out pile data about the selected pile xn from the pile data storage unit, and acquires the installation target position coordinates (x, y, z) and the diameter Dn of the pile. Moreover, in the present example, the length Ln of the pile xn is also previously stored as pile data in the pile data storage unit M1.

While the automatic surveying program and the automatic surveying system can be configured to have various functions, here, horizontal tracking processing Q10 for implementing the function of performing automatic surveying while following the horizontal movement of the pile and vertical tracking processing Q20 for implementing the function of performing automatic surveying while following the displacement in the vertical direction caused by driving of the pile are described. Automatic tracking surveying in the invention of the present application is applied to both.

For example, an example in which a pile is conveyed by a pile conveyance apparatus such as a ship equipped with a driving member for piles and pile driving is performed at a predetermined position on the sea is used for description. First, to guide a ship which conveys a pile x toward a predetermined position, horizontal tracking processing Q10 for the function of performing automatic surveying while following horizontal movement is caused to be performed. Fig. 5 is a flowchart used for explaining the horizontal tracking processing Q10. First, the vertical angle $\theta$ of the distance measurement member 2 is adjusted to a height position easy to measure in the pile x. Moreover, the horizontal angle of the distance measurement member 2 is adjusted to the vicinity of the center position P0 of the pile x. These processing operations can be manually performed by the worker. Then, automatic surveying is started.

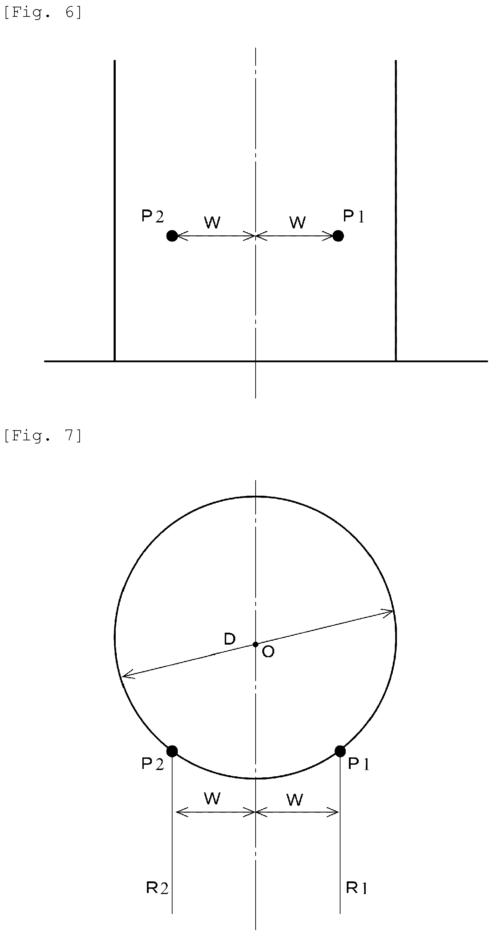

Fig. 6 is a front view of a pile illustrating a right side measurement position and a left side measurement position, and Fig. 7 is a plan view of the same pile. Distance measurement with respect to right and left positions shifting by a predetermined distance W from the center of the pile x is continuously repeated. W, which is the shift width, is determined by a predetermined proportion D/N (N > 2) to the diameter D of the pile. For example, W can be selected from, for example, D/3, D/4, D/5, and D/6, but, since W = D/4 is particularly suitable for automatic tracking in the horizontal direction, this shift width is used for the following description.

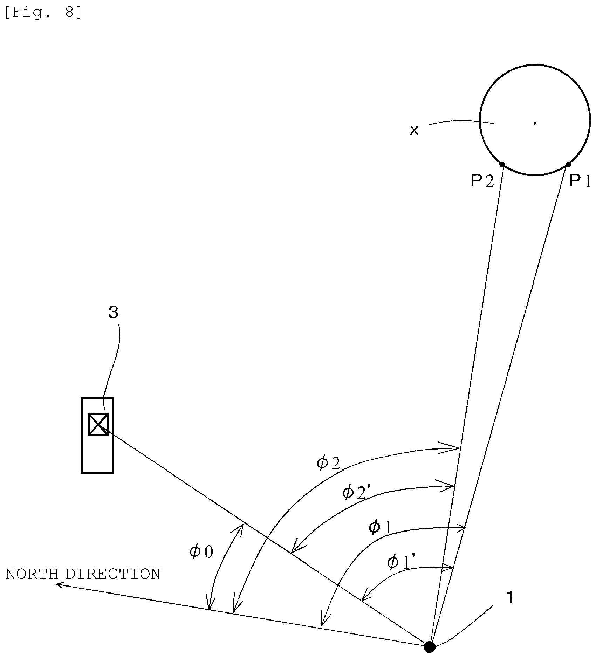

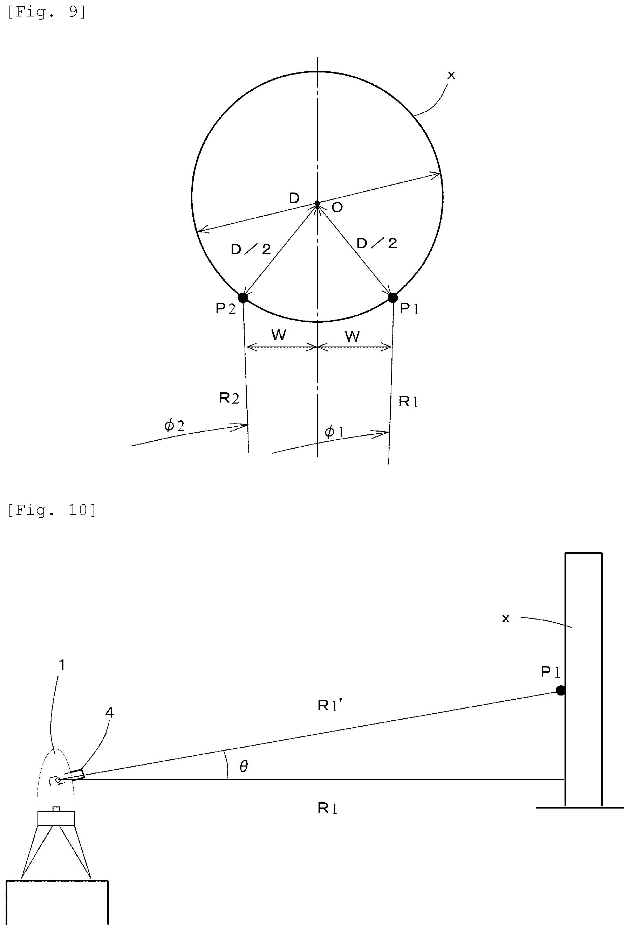

Fig. 8 is a plan view used for explaining distance measurement, and Fig. 9 is an enlarged plan view of a portion of the pile. Right side distance measurement processing Q1 for acquiring distance measurement data R1' of the distance measurement member by driving the distance measurement member horizontal angle rotating member 6 in such a way as to cause the distance measurement member 4 to face the right side measurement position P1, which has shifted by W (= D/4) from the center of the pile targeted for surveying 1, as a first measurement position is performed. A horizontal angle $\phi 1'$ of the distance measurement member 4 obtained at this time is also caused to be acquired by the surveying site terminal 22. Here, the obtained horizontal angle $\phi 1'$ is an included angle that is based on the direction of the reference point reflecting member 3. Since a horizontal angle $\phi 0$ of the reference point reflecting member 3 with respect to the north can be recognized based on a design document, a horizontal angle $\phi 1$ of the measurement point with respect to the north can also be calculated by $\phi 1 = \phi 1' - \phi 0$. The position of the right side measurement position P1 on the map can be obtained as absolute coordinates based on the horizontal angle $\phi 1$, the vertical angle $\theta$, and a distance R1. Furthermore, while, since the horizontal angle $\phi 0$ of the reference point reflecting member 3 is fixed, the horizontal angle $\phi 1$ and the included angle $\phi 1'$ which are to be measured correspond to each other on a one-to-one basis and either angle can be used to implement the invention of the present application, the horizontal angle to be described below is an angle that is based on the north.

A horizontal distance R is used for calculation of the center position and inclination of the pile x. Fig. 10 is a side view used for explaining distance measurement. When the distance obtained by distance measurement is denoted by R' and the vertical angle of the distance measurement member 2 facing the measurement point is denoted by $\theta$, the horizontal distance R is calculated as R = R' · cos $\theta$. Accordingly, the horizontal distance R1 of the right side measurement position P1 can be calculated from the distance measurement data R1' by the above-mentioned equation. Hereinafter, unless otherwise stated, the horizontal distance is simply referred to as a "distance".

Next, distance measurement about a second measurement position Q2 is performed. Processing for acquiring distance measurement data R2 of the distance measurement member 2 by driving the distance measurement member horizontal angle rotating member in such a way as to cause the distance measurement member 1 to face the left side measurement position P2, which has shifted by D/4 from the center of the pile targeted for surveying, as the second measurement position is performed. An included angle $\phi2$ can be acquired from the surveying apparatus 1, or can be calculated from $\phi1$ and the turning angle of the distance measurement member 2. The position of the left side measurement position P2 is also identified based on the included angle $\phi2$, the vertical angle $\theta$, and the distance R2.

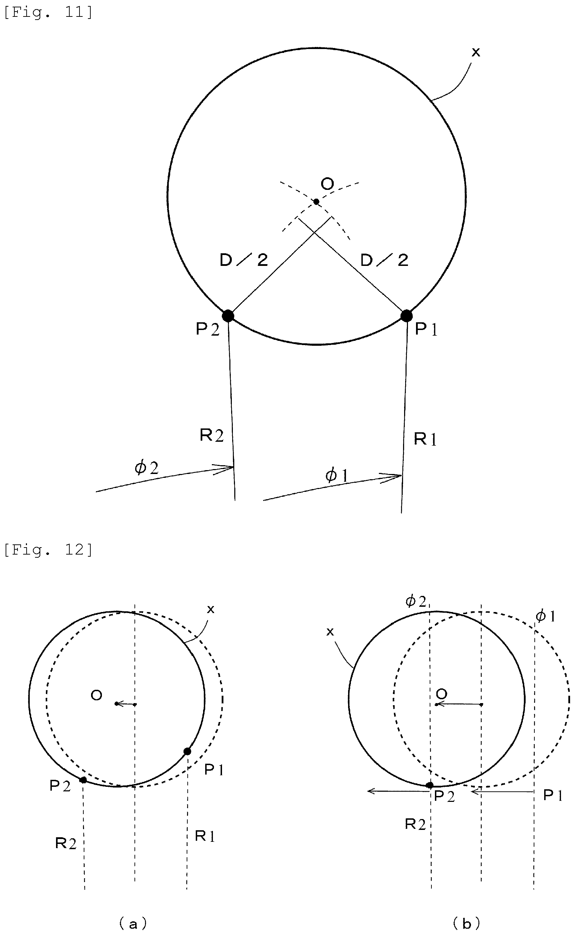

The center position O of the pile x is calculated by center position calculation processing Q3. Fig. 11 is an explanatory diagram illustrating the center position of a pile, and is a sectional view of the pile taken at the height of the measurement positions P1 and P2. Since the coordinates of the right side measurement position P1 and the left side measurement position P2 are identified and the diameter of the pile is D, the center O of the pile can be determined by obtaining a point with a distance of D/2 from both of P1 and P2. Such a calculation can be performed with ease, and, therefore, no specific explanation is required. The coordinates (x, y) of the center O of the pile are transmitted to the conveyance unit terminal 23 provided in the ship via a communication line. The conveyance unit terminal 23 receives these coordinates and causes a display member thereof to display the coordinates, thus being able to inform staff present in the ship of the current position of the pile x.

In this way, the pile center position O can be acquired based on a combination of distance measurement processing R1 of the right side measurement position P1 and distance measurement processing P2 of the left side measurement position P2. This processing for the combination is continuously repeated. Furthermore, while, in the above-mentioned example, the right side measurement position P1 is first measured, the order of measurement of right and left sides is optional. Moreover, the order does not need to be fixed, but, according to the direction of movement of the pile x, the measurement position at the side opposite to the direction of movement can be first measured.

Fig. 12 is an explanatory diagram illustrating measurement of the pile x at any given point in time. A circle indicated by a dotted line is the position of the pile x obtained at the last measurement, and a solid line indicates the current position of the pile x. In Fig. 12 (a), both the right and left side measurement positions P1 and P2 exist on the surface of the pile x. Accordingly, the distances R1 and R2 in the respective measurement positions P1 and P2 can be normally measured and the current center position O of the pile x can be obtained based on these values, so that the center position O can be transmitted to the conveyance unit terminal 23. In this way, abnormality determination processing Q4 for determining a normal measurement state and an abnormal measurement state is performed based on distance data. In a case where the center position O is able to be obtained based on the distances R1 and R2, it is determined that a normal state is occurring. Moreover, the amount of movement and the speed of movement of the pile x can be calculated by making a comparison with data about the last center position, so that these values can also be transmitted to the conveyance unit terminal 23. Furthermore, the measurement positions P1 and P2 in the next measurement can be determined after shifting by a horizontal angle corresponding to the amount of movement of the pile x.

In Fig. 12(b), the amount of movement of the pile x is large, so that the surface of the pile x does not appear in the direction $\phi1$ directed to the right side measurement position P1. Accordingly, the distance of the right side measurement position P1 becomes unable to be measured, so that the center position O cannot be identified. In abnormality determination processing Q4 for determining a normal measurement state and an abnormal measurement state, it is determined that the abnormal measurement state is occurring. On the other hand, since the left side measurement position P2 is present on the surface of the pile x, the distance R2 is able to be detected. In this way, in the case of the abnormal measurement state, the distance measurement member horizontal angle rotating member is driven in such a way as to move the direction of the distance measurement member by a predetermined movement amount in a direction of a side which is not in the abnormal measurement state of the right side measurement position P1 or the left side measurement position P2. In other words, in the present example, the next measurement position is set by shifting toward the side of the left side measurement position P2, i.e., the left side. For example, the next right side measurement direction $\phi1$ and left side measurement direction $\phi2$ are set by shifting to the left side by an angle $\tan^{-1} (D/4R)$ corresponding to the distance of D/4. This enables the direction of the distance measurement member to automatically follow the direction in which the pile x has moved, thus continuing surveying.

In the present example, while the work for causing the distance measurement member to face the center of the pile x at the time of starting measurement is performed manually, after that, distance measurement is performed while the pile x is automatically tracked, so that staff does not need to stay at all times. The automatic surveying system 100 continues transmitting data about the center position of the pile x to the conveyance unit terminal 23 in the ship until the pile x arrives at the position designated in a design drawing.

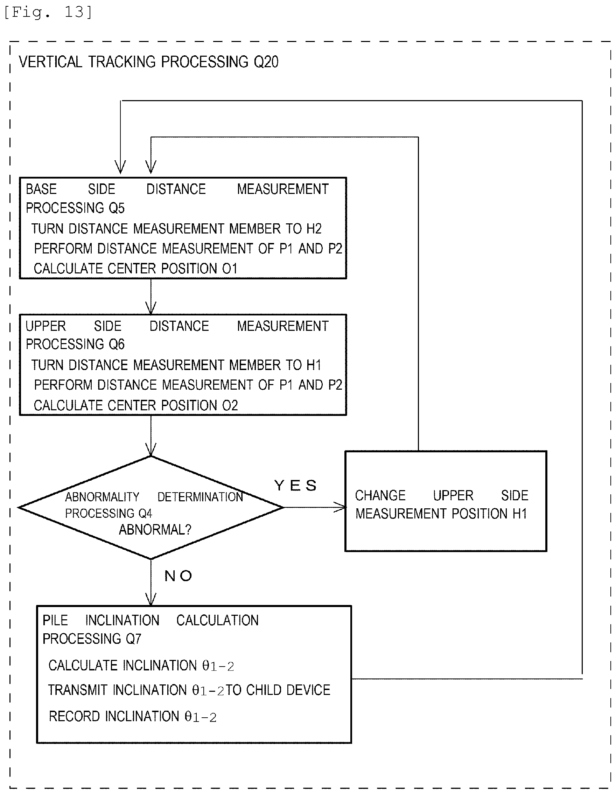

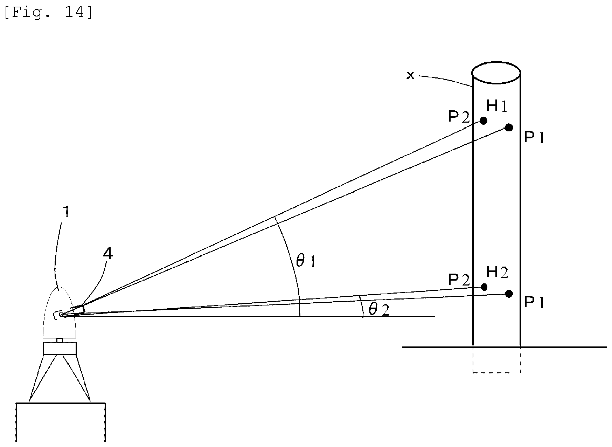

When the pile x arrives at a scheduled position and driving thereof is performed, the function of performing automatic surveying while following the displacement in the vertical direction is performed by vertical tracking processing Q20. Fig. 13 is a flowchart used for explaining vertical tracking processing, and Fig. 14 is a conceptual diagram illustrating measurement in the vertical tracking processing. First, an upper portion side height position H1 and a base side height position H2 of a pile targeted for surveying are determined. The worker can manually turn the distance measurement member toward the upper portion side height position H1 and the base side height position H2, thus specifying the respective vertical angles $\theta1$ and $\theta2$. Moreover, length data L about the pile x can be previously registered as pile data and the vertical angles $\theta1$ and $\theta2$ can be calculated based on the length data L. Since the setting position of the pile x is previously registered and the distance is able to be calculated based on the setting position, the vertical angles $\theta 1$ and $\theta 2$ can be calculated with ease. Here, it is favorable that the base side height position H2 is set to as low a position as possible within a range available for distance measurement. Moreover, it is also favorable that the upper portion side height position H1 is set to as high a position as possible, but the upper portion side height position H1 does not need to be limited to the uppermost portion. The uppermost portion of the pile x may be grasped by a chuck for pitching of pile or may be considerably thinner than the base portion thereof, and, therefore, in that case, the upper portion side height position H1 can be set to a position which is slightly lower than the top portion and the diameter of which can be considered to be almost the same as the base portion. The upper portion side height position H1 serves as a first measurement position, and the base side height position H2 serves as a second measurement position. Automatic surveying is performed by repetition of distance measurement processing at the base side height position H2 and distance measurement processing at the upper side height position H1.

In distance measurement processing Q5 at the base side height position H2, processing for driving the distance measurement member vertical angle rotating member 5 in such a way as to cause the distance measurement member 4 to face the base side height position H2 of the pile x targeted for surveying is performed. Then, at the base side height position H2 of the pile, distance measurement in the right side measurement position P1 and the left side measurement position P2 of the pile x targeted for surveying is performed, so that respective pieces of distance data R1 and R2 are obtained. This processing is the same as the case of horizontal direction follow, and, therefore, the detailed description thereof is omitted. The center position 02 of the pile x in the base side height position H2 is obtained based on the pieces of distance data R1 and R2.

In distance measurement processing Q6 at the upper side height position H1, processing for driving the distance measurement member vertical angle rotating member 5 in such a way as to cause the distance measurement member 2 to face the upper side height position H1 of the pile targeted for surveying is performed. Then, at the upper side height position H1 of the pile, distance measurement in the right side measurement position P1 and the left side measurement position P2 of the pile targeted for surveying is also performed, so that respective pieces of distance data R1 and R2 are obtained, and, then, a center position O1 of the pile x in the upper side height position H1 is obtained.

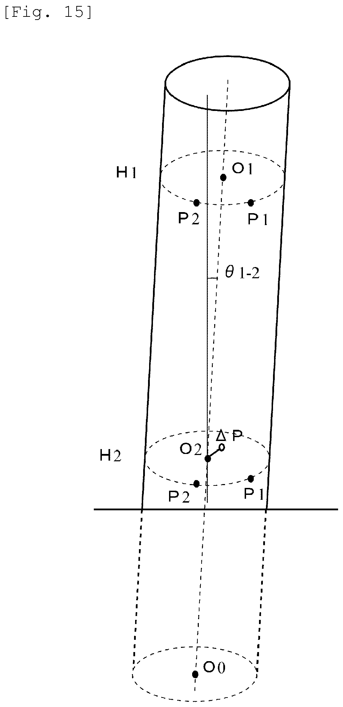

In the upper side height position H1, abnormality determination processing Q4 for determining a normal measurement state and an abnormal measurement state is performed based on distance measurement data. When pieces of distance data R1 and R2 are obtained and the center position O1 of the pile x is able to be obtained, it is determined that a normal state is occurring. At this time, evaluation Q7 of an inclination of the pile x is performed by comparing data about the center position O1 of the upper side height position H1 with data about a center position 02 of the base side height position H2. Fig. 15 is a conceptual diagram illustrating an inclination of the pile.

Deviations $\Delta x$ and $\Delta y$ in the horizontal direction between the center position O1 (x1, y1) and the center position 02 (x2, y2) can be obtained.

$$\Delta x = x1 - x2, \ \Delta y = y1 - y2$$

$$\Delta P = ((x1 - x2)^2 + (y1 - y2)^2)^{1/2}$$

Alternatively, an inclination angle $\theta 1\text{-}2$ can be obtained.

$$\theta 1\text{-}2 = \tan^{-1}(\Delta P/(H1 - H2))$$

Data about the center position O1 (x1, y1) and the center position 02 (x2, y2) of the pile x and data about the deviations $\Delta x$ and $\Delta y$ are transmitted to the conveyance unit terminal 23 via a communication line. The conveyance unit terminal 23 receives these pieces of data and causes a display member thereof to display these pieces of data. Moreover, a center position in the lower end portion of the pile x which has already inserted into the ground can also be calculated based on the inclination $\theta 1\text{-}2$, and, furthermore, a deviation from the center position O1 in the upper side height position H1 can also be calculated. Staff present in the ship can know the inclination state of the pile x in real time and can bring the pile x close to the vertical state while performing necessary corrections at appropriate timing based on the inclination state.

Furthermore, an allowable limit $\theta$Lim of the inclination of the pile can be previously defined, the inclination $\theta 1\text{-}2$ and the allowable limit $\theta$Lim can be compared with each other, and, when the inclination $\theta 1\text{-}2$ has exceeded the allowable limit $\theta$Lim, a warning signal can be transmitted to the conveyance unit terminal 23. It can be determined whether the allowable limit is exceeded, based on the magnitude of a deviation between the center positions in the upper and lower sides.

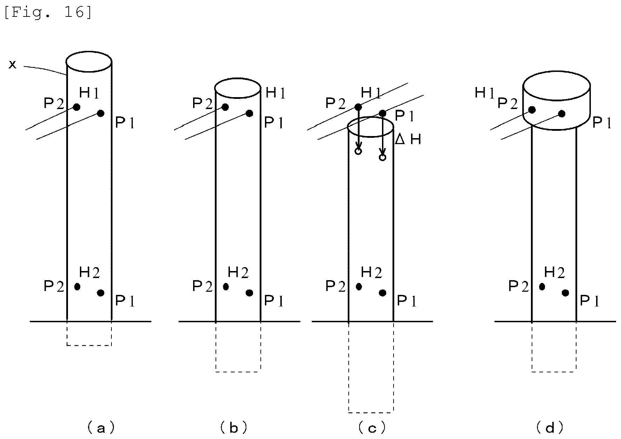

Fig. 16 is a conceptual diagram schematically illustrating an operation for vertical tracking. As illustrated in Fig. 16(a), in an initial state, distance measurement is able to be performed at the upper side measurement position H1, which has been first set. While, as driving of the pile x advances, the top portion of the pile x lowers, when the upper side measurement position H1 is on the surface of the pile x as illustrated in Fig. 16 (b), distance measurement is able to be directly performed. However, when driving of the pile further advances, a situation in which the top portion of the pile becomes lower than the upper side measurement position H1 as illustrated in Fig. 16(c) occurs. At this time, distance measurement is not able to be performed in the upper side measurement position H1, and the center position O1 is also not able to be obtained. In this case, in the abnormality determination processing Q4 for determining a normal measurement state and an abnormal measurement state, it is determined that an abnormal state is occurring. Moreover, in a case where a member thicker than the diameter of the pile x is attached to the upper portion of the pile x and that portion corresponds to the upper side measurement position H1 as illustrated in Fig. 16(d), the center position 02 is also not able to be correctly obtained, and it can be determined that an abnormal state is occurring. In the case of an abnormal state as mentioned above, setting is performed such that the upper side measurement position H1 is lowered by a predetermined distance ΔH. This lowering distance ΔH is optional, but can be set to about 1 m in the case of ordinary pile driving. Then, the distance measurement member 2 is caused to face the newly set upper side measurement position H1.

With the above-described processing repeated, the inclination of the pile continues being automatically measured while lowering of the upper end portion of the pile x caused by pile driving is followed. When the pile x has been driven to the depth defined in the specifications mentioned in the design document, the vertical tracking processing Q20 for performing automatic surveying while following the displacement in the vertical direction is ended.

There is also a construction method of driving a plurality of short piles while joining them in succession at one place for pile driving. In this case, when a pile has been driven to a predetermined height, automatic surveying is temporarily stopped. A next pile is joined to the upper end of the driven pile by, for example, welding. Then, the upper side measurement position H1 is defined at the upper portion of the new pile, and, while the pile driving work is performed, automatic measurement processing is resumed.

Center position data O (x, y) of the pile acquired by horizontal tracking processing at the time of movement of the pile x and data about the center positions O1 (x1, y1) and O2 (x2, y2) and the inclination θ1-2 of the pile acquired by vertical tracking processing at the time of pile driving are sequentially stored in the information processing apparatus 2. Those can be stored in a storage device of the surveying site terminal 22, or can be transmitted to, for example, an external server present in, for example, an office of the constructor and stored in a storage device of the external server. Such stored data constitutes a strong evidence for verifying the accuracy of construction.

Industrial Applicability

This invention is applicable as an automatic surveying program and an automatic surveying system in which it is not necessary to perform attachment and detachment of a reflecting target to and from a pile targeted for surveying and it is possible to cause the direction of the distance measurement member to appropriately follow the displacement of the pile, thus automatically continuing surveying.

Reference Signs List

1. surveying apparatus
2. information processing apparatus
3. reference point reflecting member
4. distance measurement member
5. distance measurement member vertical angle rotating member
6. distance measurement member horizontal angle rotating member
21. information processing apparatus in surveying apparatus
22. surveying site terminal
23. conveyance unit terminal
x. pile
100. automatic surveying system

**Claims**

1. An automatic surveying program for causing an information processing apparatus to repeatedly perform:

   processing which drives a distance measurement member rotating member in such a way as to cause a distance measurement member to face a first measurement position of a pile targeted for surveying and then acquires distance measurement data of the distance measurement member;
   processing which drives the distance measurement member rotating member in such a way as to cause the distance measurement member to face a second measurement position of the pile targeted for surveying and then acquires distance measurement data of the distance measurement member; and
   processing which determines a normal measurement state and an abnormal measurement state based on distance measurement data, and
   for causing the information processing apparatus to perform processing which, in a case of the abnormal measurement state, drives the distance measurement member rotating member in such a way as to move a direction of the distance measurement member by a predetermined movement amount in a direction of a side which is not in the abnormal measurement state of the first measurement position or the second measurement position.

2. The automatic surveying program according to claim 1, for causing the information processing apparatus to repeatedly perform:

   processing which drives a distance measurement member vertical angle rotating member in such a way as to cause the distance measurement member to face a base side height position of a pile targeted for surveying and then acquires distance measurement data of the distance measurement member;
   processing which drives the distance measurement member vertical angle rotating member in such a way as to cause the distance measurement member to face an upper portion side height position of the pile targeted for surveying and then acquires distance measurement data of the distance measurement member; and
   processing which determines a normal measurement state and an abnormal measurement state based on distance measurement data in the upper portion side height position, and

   for causing the information processing apparatus to perform processing which, in a case of the abnormal measurement state, drives the distance measurement member vertical angle rotating member in such a way as to move the direction of the distance measurement member by a predetermined movement amount in a direction of the base side height position and newly sets that position to the upper portion side height position.

3. The automatic surveying program according to claim 1, for causing the information processing apparatus to repeatedly perform:

   processing which drives a distance measurement member horizontal angle rotating member in such a way as to cause the distance measurement member to face a right side measurement position of a pile targeted for surveying and then acquires distance measurement data of the distance measurement member;
   processing which drives the distance measurement member horizontal angle rotating member in such a way as to cause the distance measurement member to face a left side measurement position of the pile targeted for surveying and then acquires distance measurement data of the distance measurement member; and
   processing which determines a normal measurement state and an abnormal measurement state based on distance measurement data, and
   for causing the information processing apparatus to perform processing which, in a case of the abnormal measurement state, drives the distance measurement member horizontal angle rotating member in such a way as to move the direction of the distance measurement member by a predetermined movement amount in a direction of a side which is not in the abnormal measurement state of the right side measurement position or the left side measurement position and shifts a measurement reference position by the movement amount and sets the shifted measurement reference position.

4. An automatic surveying system comprising a surveying apparatus including a distance measurement member capable of performing distance measurement in a non-prism method and a distance measurement member rotating member which rotates the distance measurement member and an information processing apparatus which controls the surveying apparatus, and performing:

processing which drives the distance measurement member rotating member in such a way as to cause the distance measurement member to face a first measurement position of a pile targeted for surveying and then acquires distance measurement data of the distance measurement member;

processing which drives the distance measurement member rotating member in such a way as to cause the distance measurement member to face a second measurement position of the pile targeted for surveying and then acquires distance measurement data of the distance measurement member;

processing which determines a normal measurement state and an abnormal measurement state based on distance measurement data; and

processing which, in a case of the abnormal measurement state, drives the distance measurement member rotating member in such a way as to move a direction of the distance measurement member by a predetermined movement amount in a direction of a side which is not in the abnormal measurement state of the first measurement position or the second measurement position.

5. The automatic surveying system according to claim 4, performing:

processing which drives a distance measurement member vertical angle rotating member in such a way as to cause the distance measurement member to face a base side height position of a pile targeted for surveying and then acquires distance measurement data of the distance measurement member;

processing which drives the distance measurement member vertical angle rotating member in such a way as to cause the distance measurement member to face an upper portion side height position of the pile targeted for surveying and then acquires distance measurement data of the distance measurement member;

processing which determines a normal measurement state and an abnormal measurement state based on distance measurement data in the upper portion side height position; and

processing which, in a case of the abnormal measurement state, drives the distance measurement member vertical angle rotating member in such a way as to move the direction of the distance measurement member by a predetermined movement amount in a direction of the base side height position and newly sets that position to the upper portion side height position.

6. The automatic surveying system according to claim 4, performing:

processing which drives a distance measurement member horizontal angle rotating member in such a way as to cause the distance measurement member to face a right side measurement position of a pile targeted for surveying and then acquires distance measurement data of the distance measurement member;

processing which drives the distance measurement member horizontal angle rotating member in such a way as to cause the distance measurement member to face a left side measurement position of the pile targeted for surveying and then acquires distance measurement data of the distance measurement member;

processing which determines a normal measurement state and an abnormal measurement state based on distance measurement data; and

processing which, in a case of the abnormal measurement state, drives the distance measurement member horizontal angle rotating member in such a way as to move the direction of the distance measurement member by a predetermined movement amount in a direction of a side which is not in the abnormal measurement state of the right side measurement position or the left side measurement position and shifts a measurement reference position by the movement amount and sets the shifted measurement reference position.

EP 3 447 444 A1

[Fig. 1]

11

[Fig. 2]

2

22   23

UI CONTROL

10

CPU

AUTOMATIC
SURVEYING PROGRAM

25

PILE DATA

SURVEYING DATA
INCLINATION DATA

26

COMMUNICATION CONTROL

TCP/IP COMMUNICATION

WIRELESS LAN

ROUTER

WIRELESS LAN

COMMUNICATION CONTROL

UI CONTROL

CPU

PROXIMITY
COMMUNICATION
DEVICE

24

24

21

PROXIMITY
COMMUNICATION
DEVICE

WIRELESS LAN

1

[Fig. 3]

```
┌──────────────────────────────────────────────────────────────────────┐
│                    AUTOMATIC SURVEYING PROGRAM                         │
│                                                                   Q00  │
│  ┌──────────────┐      ┌──────────────────────────────────┐           │
│  │ PILE DATA Xn │─────▶│     PILE SELECTION PROCESSING     │           │
│  └──────────────┘      └──────────────────────────────────┘           │
│                                                                   Q10  │
│                    ┌──────────────────────────────────────────┐       │
│                    │      HORIZONTAL TRACKING PROCESSING       │       │
│                    │  ┌────────────────────────────────────┐  │   Q1  │
│                    │  │ RIGHT SIDE DISTANCE MEASUREMENT     │  │       │
│                    │  │ PROCESSING                         │  │       │
│                    │  ├────────────────────────────────────┤  │   Q2  │
│                    │  │ LEFT SIDE DISTANCE MEASUREMENT      │  │       │
│  ┌──────────────┐  │  │ PROCESSING                         │  │       │
│  │ SURVEYING    │  │  ├────────────────────────────────────┤  │   Q3  │
│  │ DATA         │◀─┼──│ CENTER POSITION CALCULATION        │  │       │
│  │ CENTER       │  │  │ PROCESSING                         │  │       │
│  │ POSITION DATA│  │  ├────────────────────────────────────┤  │   Q4  │
│  └──────────────┘  │  │ ABNORMALITY DETERMINATION          │  │       │
│                    │  │ PROCESSING                         │  │       │
│                    │  └────────────────────────────────────┘  │       │
│                    └──────────────────────────────────────────┘       │
│                                                                   Q20  │
│                    ┌──────────────────────────────────────────┐       │
│                    │       VERTICAL TRACKING PROCESSING        │       │
│                    │  ┌────────────────────────────────────┐  │   Q5  │
│                    │  │ BASE SIDE DISTANCE MEASUREMENT      │  │       │
│                    │  │ PROCESSING                         │  │       │
│                    │  │  ┌──────────────────────────────┐  │  │       │
│                    │  │  │ RIGHT SIDE DISTANCE          │  │  │       │
│                    │  │  │ MEASUREMENT PROCESSING       │  │  │       │
│                    │  │  ├──────────────────────────────┤  │  │       │
│                    │  │  │ LEFT SIDE DISTANCE           │  │  │       │
│                    │  │  │ MEASUREMENT PROCESSING       │  │  │       │
│                    │  │  ├──────────────────────────────┤  │  │       │
│                    │  │  │ CENTER POSITION CALCULATION  │  │  │       │
│                    │  │  │ PROCESSING                   │  │  │       │
│                    │  │  └──────────────────────────────┘  │  │   Q6  │
│                    │  ├────────────────────────────────────┤  │       │
│                    │  │ BASE SIDE DISTANCE MEASUREMENT      │  │       │
│                    │  │ PROCESSING                         │  │       │
│                    │  │  ┌──────────────────────────────┐  │  │       │
│                    │  │  │ RIGHT SIDE DISTANCE          │  │  │       │
│                    │  │  │ MEASUREMENT PROCESSING       │  │  │       │
│                    │  │  ├──────────────────────────────┤  │  │       │
│                    │  │  │ LEFT SIDE DISTANCE           │  │  │       │
│                    │  │  │ MEASUREMENT PROCESSING       │  │  │       │
│                    │  │  ├──────────────────────────────┤  │  │       │
│                    │  │  │ CENTER POSITION CALCULATION  │  │  │       │
│                    │  │  │ PROCESSING                   │  │  │       │
│                    │  │  ├──────────────────────────────┤  │  │       │
│                    │  │  │ ABNORMALITY DETERMINATION    │  │  │       │
│  ┌──────────────┐  │  │  │ PROCESSING                   │  │  │       │
│  │ INCLINATION  │  │  │  └──────────────────────────────┘  │  │   Q7  │
│  │ DATA         │◀─┼──┼────────────────────────────────────┼──│       │
│  ├──────────────┤  │  │ ┌────────────────────────────────┐ │  │       │
│  │ INCLINATION  │──┼──┼▶│ INCLINATION EVALUATION         │ │  │       │
│  │ ALLOWABLE    │  │  │ │ PROCESSING                     │ │  │       │
│  │ LIMIT θ1-2   │  │  │ └────────────────────────────────┘ │  │       │
│  └──────────────┘  └──────────────────────────────────────────┘       │
└──────────────────────────────────────────────────────────────────────┘
```

M1

[Fig. 4]

| PILE DATA | | | |
|---|---|---|---|
| PILE NUMBER | INSTALLATION LOCATION COORDINATES | DIAMETER | LENGTH |
| x1 | x1, y1, z1 | D1 | L1 |
| x2 | x2, y2, z2 | D2 | L2 |
| x3 | x3, y3, z3 | D3 | L3 |
| ⋮ | ⋮ | ⋮ | ⋮ |
| xn | xn, yn, zn | Dn | Ln |
| ⋮ | ⋮ | ⋮ | ⋮ |

[Fig. 5]

HORIZONTAL TRACKING PROCESSING Q10

RIGHT SIDE DISTANCE MEASUREMENT PROCESSING Q1
 TURN DISTANCE MEASUREMENT MEMBER TO P1
 PERFORM DISTANCE MEASUREMENT

LEFT SIDE DISTANCE MEASUREMENT PROCESSING Q2
 TURN DISTANCE MEASUREMENT MEMBER TO P2
 PERFORM DISTANCE MEASUREMENT

ABNORMALITY DETERMINATION PROCESSING Q4
ABNORMAL?

YES → CHANGE MEASUREMENT POSITIONS P1 AND P2

NO

CENTER POSITION CALCULATION PROCESSING Q3
 CALCULATE CENTER POSITION O
 TRANSMIT CENTER POSITION O TO CHILD DEVICE
 RECORD CENTER POSITION O

[Fig. 6]

[Fig. 7]

[Fig. 8]

NORTH DIRECTION

[Fig. 9]

[Fig. 10]

[Fig. 11]

[Fig. 12]

（ａ）　　　　　　　　　　　　　　　（ｂ）

[Fig. 13]

VERTICAL TRACKING PROCESSING Q20

BASE SIDE DISTANCE MEASUREMENT PROCESSING Q5
 TURN DISTANCE MEASUREMENT MEMBER TO H2
 PERFORM DISTANCE MEASUREMENT OF P1 AND P2
 CALCULATE CENTER POSITION O1

UPPER SIDE DISTANCE MEASUREMENT PROCESSING Q6
 TURN DISTANCE MEASUREMENT MEMBER TO H1
 PERFORM DISTANCE MEASUREMENT OF P1 AND P2
 CALCULATE CENTER POSITION O2

ABNORMALITY DETERMINATION PROCESSING Q4
ABNORMAL?

YES

CHANGE UPPER SIDE MEASUREMENT POSITION H1

NO

PILE INCLINATION CALCULATION PROCESSING Q7
 CALCULATE INCLINATION $\theta_{1-2}$
 TRANSMIT INCLINATION $\theta_{1-2}$ TO CHILD DEVICE
 RECORD INCLINATION $\theta_{1-2}$

[Fig. 14]

[Fig. 15]

[Fig. 16]

( a )　　　　　( b )　　　　　( c )　　　　　( d )

## INTERNATIONAL SEARCH REPORT

| International application No. |
| --- |
| PCT/JP2018/002173 |

**A. CLASSIFICATION OF SUBJECT MATTER**
Int.Cl. G01C15/00(2006.01)i

According to International Patent Classification (IPC) or to both national classification and IPC

**B. FIELDS SEARCHED**

Minimum documentation searched (classification system followed by classification symbols)
Int.Cl. G01C15/00

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-217807 A (KEISOKU NET SERVICE K.K.) 24 October 2013, entire text, all drawings (Family: none) | 1–6 |
| A | JP 2003-106838 A (NIKON GEOTECS CO., LTD., NIKON SYSTEMS INC., NIKON CORP.) 09 April 2003, entire text, all drawings (Family: none) | 1–6 |
| A | JP 63-210614 A (ASAKAWAGUMI CO., LTD.) 01 September 1988, entire text, all drawings (Family: none) | 1–6 |
| A | JP 2006-23237 A (SOKKIA CO., LTD.) 26 January 2006, entire text, all drawings & CN 1719196 A | 1–6 |
| A | US 2012/0130675 A1 (LEICA GEOSYSTEMS AG) 24 May 2012, whole documents & EP 2458328 A1 & CN 102564405 A | 1–6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 April 2018 (09.04.2018) | 17 April 2018 (17.04.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 447 444 A1**

## REFERENCES CITED IN THE DESCRIPTION

**Patent documents cited in the description**

- JP 2016138802 A